# EUROPEAN PATENT APPLICATION

(11) **EP 4 184 674 A1**
(43) Date of publication of application: **24.05.2023**
(21) Application number: 21880369.0
(22) Date of filing: 01.10.2021
(51) Int. Cl.: H01M 50/169, H01M 50/153, H01M 50/109, H01M 50/172, H01M 10/04

(54) **BUTTON-TYPE SECONDARY BATTERY**

(30) Priority: 12.10.2020 KR 20200131453
(71) Applicant: LG Energy Solution, Ltd., Seoul 07335 (KR)
(72) Inventor: MIN, Geon Woo, Daejeon 34122 (KR); LIM, Jae Won, Daejeon 34122 (KR); CHO, Kyung Wook, Daejeon 34122 (KR); LEE, Yong Gon, Daejeon 34122 (KR); LEE, Je Jun, Daejeon 34122 (KR); HWANGBO, Kwang Su, Daejeon 34122 (KR); CHO, Min Su, Daejeon 34122 (KR); KIM, Min Gyu, Daejeon 34122 (KR); CHAE, Sang Hak, Daejeon 34122 (KR)
(74) Representative: Hoffmann Eitle
(86) International application number: PCT/KR2021/013541
(87) International publication number: WO 2022/080722

(57) **Abstract**

The present invention provides a button-type secondary battery comprising: an electrode assembly in which electrodes and a separator are wound in a state of being stacked and from which electrode tabs having different polarities protrude from top and bottom surfaces thereof, respectively; a can comprising a bottom part placed below when the electrode assembly is mounted and connected to one electrode tab and a sidewall vertically extending along a circumference of the bottom part; and a top cap assembly provided with a terminal part connected to the other electrode tab and a plate coupled to be insulated from the terminal part and having an edge coupled to an upper end of the sidewall, wherein, when the electrode assembly is mounted in the can, the top cap assembly is coupled to close the can, wherein an end of an edge of the plate is welded to be coupled after being seated on a point that meets the upper end of the sidewall.

In the present invention having the above configuration, since the welding is performed after being seated on the point at which the end of the edge of the plate meets the upper end of the sidewall, the welding may be more stably performed to improve the welding quality.

## Description

### CROSS-REFERENCE TO RELATED APPLICATION

The present application claims the benefit of the priority of Korean Patent Application No. 10-2020-0131453, filed on October 12, 2020, which is hereby incorporated by reference in its entirety.

### TECHNICAL FIELD

The present invention relates to a button-type secondary battery, and more particularly, to a button-type secondary battery in which welding is performed in a state, in which a top cap assembly is stably seated on an upper end of a sidewall of a can to more easily perform a welding process.

### BACKGROUND ART

A button-type battery commonly used as a coin-type battery or a button-type battery has a thin button shape and is widely used in various devices such as remote controllers, clocks, toys, computer parts, and the like.

Such a button-type battery is mainly manufactured as a non-rechargeable primary battery, but is also widely manufactured as a secondary battery that is chargeable and dischargeable as miniaturized devices are developed. Also, the button-type secondary battery also has a structure in which an electrode assembly and an electrolyte are embedded in a case to repeatedly perform charging and discharging, like the button-type secondary battery or the cylindrical or pouch-type secondary battery.

In the button-type battery, when the electrode assembly is mounted on a lower can, an upper can is press-fitted onto a lower can so as to be coupled. However, in order to maximize an internal space and prevent deformation due to the press-fitting, a structure, in which a top cap assembly 1 is welded to be coupled onto the can 20 has also been disclosed.

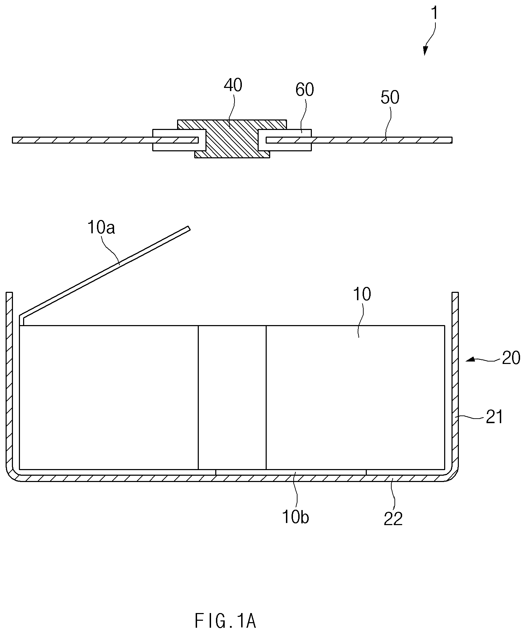

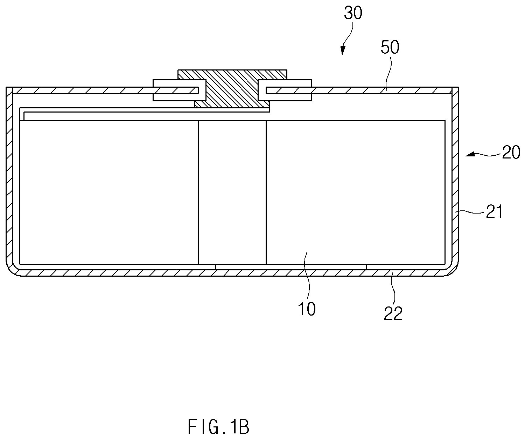

That is, referring to FIGS. 1A and 1B, which illustrate cross-sectional views before and after a plate is coupled onto the can in the button-type secondary battery according to the related art, respectively, the button-type secondary battery, which is coupled through welding, has a flat cylindrical shape similar to a shape of a schale and comprises the can 20 having an opened upper side and the top cap assembly 1 coupled through the welding to close the opened upper side of the can 20.

The can 20 has a bottom part 22 placed at a lower side when the electrode assembly 10 is mounted, and a sidewall 21 extending vertically along a circumference of the bottom part 22. Also, an electrode assembly 10, in which a positive electrode, a separator, and a negative electrode are stacked, and an electrolyte are mounted in a space provided inside the sidewall 21 above the bottom part 22. Here, in the electrode assembly 10, a negative electrode tab 10b protruding from the negative electrode is electrically connected to a bottom surface of the can 20, and a positive electrode tab 10a protruding from the positive electrode is electrically connected to a positive electrode terminal 40 constituting the top cap assembly 1.

The positive electrode terminal 40 is coupled to a plate 50, and a gasket 60 is inserted between the positive electrode terminal 40 and the plate 50 so that the positive electrode terminal 40 and the plate 50 are electrically insulated from each other. That is, the plate 50 has a disk-like shape that is capable of being placed on the sidewall 21 of the can 20 and has a structure, in which a hole is punched in a center thereof, and the positive electrode terminal 40 and the gasket 60 are mounted in the hole.

In the structure according to the related art, the plate 50 is welded through a laser at a point that is in contact with the sidewall 21 of the can 20 in a state in which a height thereof is adjusted to match a height of the sidewall 21.

However, if stable seating or temporary fixing is not achieved at the point at which an upper end of the sidewall 21 and an edge portion of the plate 50 are in contact with each other, incomplete welding may be performed to cause a problem that the electrolyte leaks.

### DISCLOSURE OF THE INVENTION

### TECHNICAL PROBLEM

Therefore, a main object of the present invention is to provide a button-type secondary battery, in which an edge of a plate is more stably seated on an upper end of a sidewall so that welding is easy and more completely performed.

### TECHNICAL SOLUTION

A button-type secondary battery according to the present invention for achieving the above object comprises: an electrode assembly in which electrodes and a separator are wound in a state of being stacked and from which electrode tabs having different polarities protrude from top and bottom surfaces thereof, respectively; a can comprising a bottom part placed below when the electrode assembly is mounted and connected to one electrode tab and a sidewall vertically extending along a circumference of the bottom part; and a top cap assembly provided with a terminal part connected to the other electrode tab and a plate coupled to be insulated from the terminal part and having an edge coupled to an upper end of the sidewall, wherein, when the electrode assembly is mounted in the can, the top cap assembly is coupled to close the can, wherein an end of an edge of the plate is welded to be coupled after being seated on a point that meets the upper end of the sidewall.

In the present invention, the upper end of the sidewall may be bent in a direction in which an inner diameter thereof is expanded, and the end of the edge of the plate may be coupled to be in close contact with an inner circumferential surface of the upper end of the sidewall.

In the present invention, a protrusion on which a stepped portion is formed may be provided on an inner circumferential surface at the upper end of the sidewall, and the end of the edge of the plate may be coupled to be seated on the protrusion, and the upper end of the sidewall may be bent to have a shape that protrudes outward from an outer circumferential surface thereof.

In the present invention, an inclined surface may be formed on the upper end of the sidewall to have an inner diameter that gradually increases upward, and an inclined surface may be formed on the end of the edge of the plate so that a top surface of the plate and the uppermost end of the sidewall have the same height.

In the present invention, the upper end of the sidewall may be formed in an inwardly bent shape, and a protrusion may also be formed on a lower portion of the end of the edge of the plate so as to be seated on an end of the sidewall.

In the present invention, the upper end of the sidewall may have a groove of which an upper side and an outer side are connected to each other to form a recessed shape, and a projection seated on the upper end of the sidewall and inserted into the groove may protrude from the end of the edge of the plate.

In the present invention, a protrusion on which a stepped portion is formed may be provided on an inner circumferential surface at the upper end of the sidewall, and the end of the edge of the plate may be coupled to be seated on the protrusion.

In the present invention, a bent part that is expanded outward from the upper end of the sidewall when the plate is seated on the sidewall and is bent downward may be provided on the end of the edge of the plate.

In the present invention, the upper end of the sidewall may be bent in a direction in which an inner diameter thereof is expanded, and the end of the edge of the plate may be coupled to be in close contact with an inner circumferential surface of the upper end of the sidewall, wherein a portion at which the edge of the edge of the plate is in close contact with the inner circumferential surface of the upper end of the sidewall may have an upwardly bent shape.

In the present invention, the upper end of the sidewall may be bent in an outwardly protruding shape, wherein the upper side may be flat, and the upper plate may be coupled to be seated on the flat end of the sidewall.

In the present invention, a protrusion, on which a stepped portion is formed, may be formed at a lower side at the edge of the edge of the plate, and the protrusion may be coupled to be seated on the upper end of the sidewall.

In the present invention, a protrusion on which a stepped portion is formed may be provided on an inner circumferential surface at the upper end of the sidewall, and the protrusion may be coupled to be seated on the upper end of the sidewall, wherein a portion at which the edge of the edge of the plate is in close contact with an inner circumferential surface of the sidewall may have an upwardly bent shape.

In the present invention, each of the end of the edge of the plate and the upper end of the sidewall may have a shape in which a concave portion and a convex portion are repeated along a circumference thereof, and the convex portion formed on the sidewall may be fitted into the concave portion formed in the plate, and the convex portion formed on the plate may be fitted into the concave portion formed in the sidewall.

### ADVANTAGEOUS EFFECTS

In the present invention having the above configuration, since the welding is performed after being seated on the point at which the end of the edge of the plate meets the upper end of the sidewall, the welding may be more stably performed to improve the welding quality.

In addition, the number of welding points may increase to improve the coupling force through the welding, and the welding point and the electrode assembly may be maximally spaced apart from each other to prevent the electrode assembly from being thermally damaged.

### BRIEF DESCRIPTION OF THE DRAWINGS

FIG. 1a is a view illustrating a cross-section before a plate is coupled onto a can in a button-type secondary battery according to a related art.
FIG. 1b is a view illustrating a cross-section after the plate is coupled onto the can in the button-type secondary battery according to the related art.
FIG. 2 is an enlarged view illustrating a coupled portion between a can and a plate according to a first embodiment of the present invention.
FIG. 3 is an enlarged view illustrating a coupled portion between a can and a plate according to a second embodiment of the present invention.
FIG. 4 is an enlarged view illustrating a coupled portion between a can and a plate according to a third embodiment of the present invention.
FIG. 5 is an enlarged view illustrating a coupled portion between a can and a plate according to a fourth embodiment of the present invention.
FIG. 6 is an enlarged view illustrating a coupled portion between a can and a plate according to a fifth embodiment of the present invention.
FIG. 7 is an enlarged view illustrating a coupled portion between a can and a plate according to a sixth embodiment of the present invention.
FIG. 8 is an enlarged view illustrating a coupled portion between a can and a plate according to a seventh embodiment of the present invention.
FIG. 9 is an enlarged view illustrating a coupled portion between a can and a plate according to an eighth embodiment of the present invention.
FIG. 10 is an enlarged view illustrating a coupled portion between a can and a plate according to a ninth embodiment of the present invention.
FIG. 11 is an enlarged view illustrating a coupled portion between a can and a plate according to a tenth embodiment of the present invention.
FIG. 12 is an enlarged view illustrating a coupled portion between a can and a plate according to an eleventh embodiment of the present invention.
FIG. 13 is plan and side views illustrating a state in which a can and a plate are coupled to each other according to a twelfth embodiment of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a button-type secondary battery having a structure in which a top cap assembly 1 is coupled onto a can 20 through welding, and more particularly, to a button-type secondary battery, in which a plate 50 of a top cap assembly 1 is welded in a state of being seated on an upper end of a sidewall 21 of a can 20 to more easily perform a welding process.

The button-type secondary battery according to the present invention has a structure, in which when electrodes and a separator are wound in a state of being stacked, like the structure according to the related art, and an electrode assembly 10, from which electrode tabs having different polarities respectively protrude from top and bottom surfaces thereof, is mounted in the can, an edge of the plate 50 constituting the top cap assembly 1 is welded to the can 20.

The can 20 is placed below when the electrode assembly 10 is mounted and comprises a bottom part 22 connected to any one of the electrode tab (e.g., a negative electrode tab) and a sidewall 21 vertically extending upward along a circumference of the bottom part 22.

The top cap assembly 1 is provided with a terminal part 40 connected to the other electrode tab (e.g., a positive electrode tab) and a plate 50 which is coupled to be insulated from the terminal part 40 by a gasket 60 and of which an edge is coupled to an upper end of the sidewall. Thus, when the electrode assembly 10 is mounted in the can 20, the top cap assembly 1 is coupled to close the can 20.

That is, after an end of an edge of the plate 50 is seated at a point that meets an upper end of the sidewall 21, welding is performed to couple the plate 50 to the sidewall 21.

In the present invention, a plurality of structures in which the end of the edge of the plate 50 is seated on the upper end of the sidewall 21 are provided as an embodiment.

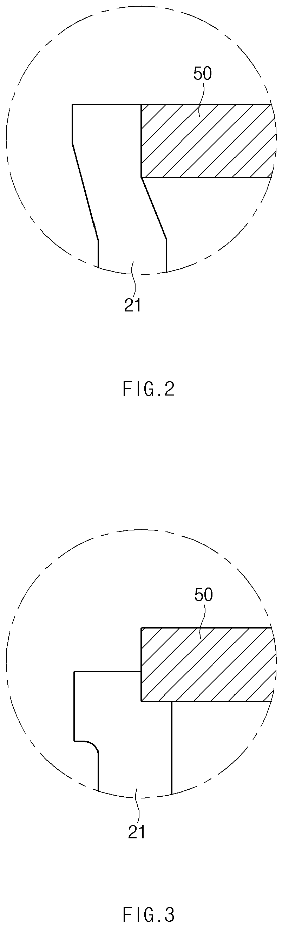

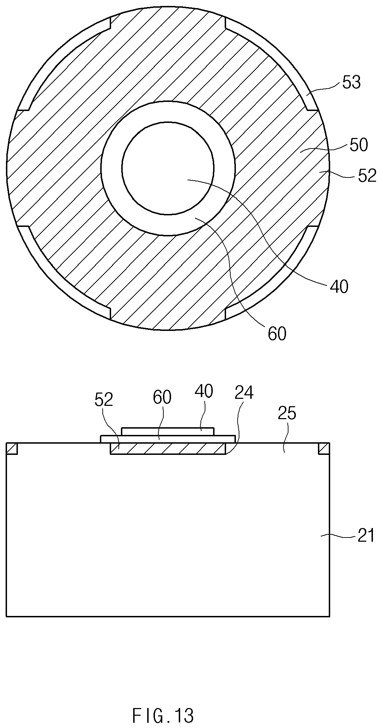

FIGS. 2 to 12 are enlarged views illustrating a coupled portion between a can and a plate according to first to eleventh embodiments of the present invention, and FIG. 13 is plan and side views illustrating a state in which a can and a plate are coupled to each other according to a twelfth embodiment of the present invention. Hereinafter, embodiments according to the present invention will be described with reference to the accompanying drawings.

### First embodiment

Referring to FIG. 2, a can 20 provided in this embodiment has a structure in which an upper end of a sidewall 21 is bent along a circumference in a direction in which an inner diameter is expanded. Also, the plate 50 is coupled so that the end of the edge is in close contact with an inner circumferential surface of the upper end of the sidewall 21. Here, the upper end of the sidewall 21 and a top surface of the plate 50 are coupled to have the same height.

In this coupling structure, before the welding of the can 20 and the plate 50 is performed, an edge of the plate 50 may be seated so as to be in contact with an inner circumferential surface of the can 20, and also, a height of the electrode assembly 10 may be maximized based on the same total height.

### Second embodiment

Referring to FIG. 3, a can 20 provided in this embodiment has a protrusion (a portion in which an 'L'-shaped groove, in which the plate is seated, is formed in FIG. 3) having a stepped portion (height difference) is provided on an inner circumferential surface at an upper end of a sidewall 21, and an end of an edge of the plate 50 is coupled to be seated on the protrusion. The upper end of the sidewall 21 is bent to have a shape protruding outward from an outer circumferential surface. Also, a top surface of the plate 50 is formed at a position higher than the upper end of the sidewall 21.

In this coupling structure, the edge of the plate 50 may be seated to be in contact with the inner circumferential surface of the can 20 before the can 20 and the plate 50 are welded. Here, when the can 20 and the plate 50 have the same total height, since welding points of the can 20 and the plate 50 are relatively far apart from each other, possibility of occurrence of thermal damage of a separator provided in the electrode assembly 10 may be reduced. Also, since the upper end of the sidewall 21 has a structure that is bent to have a shape protruding outward from an outer circumferential surface, the plate 50 may be more strongly supported.

### Third embodiment

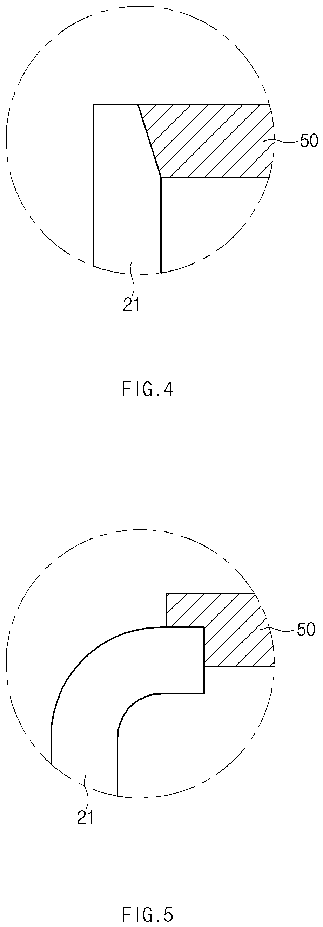

Referring to FIG. 4, a can 20 provided in this embodiment has an inclined surface (a surface forming an oblique line in FIG. 4) formed on an upper end of a sidewall 21 to have an inner diameter that increases upward. In addition, an inclined surface is also formed on an end of an edge of a plate 50 so that a top surface of the plate 50 and the uppermost end of the sidewall have the same height.

In this coupling structure, before the welding of the can 20 and the plate 50 is performed, an edge of the plate 50 may be seated so as to be in contact with an inner circumferential surface of the can 20, and also, a height and diameter of the electrode assembly 10 may be maximized based on the same total height. That is, a size of an inner space of the can 20 may be maximized.

### Fourth Embodiment

Referring to FIG. 5, a can 20 provided in this embodiment is formed in a shape in which an upper end of a sidewall 21 is bent inward. In addition, a protrusion (a portion in which an '¬'-shaped groove is formed in a plate of FIG. 5) is formed at a lower end of an edge of a plate 50 so as to be seated on an end of a sidewall 21.

In this coupling structure, the edge of the plate 50 may be seated to be in contact with the inner circumferential surface of the can 20 before the can 20 and the plate 50 are welded. Here, when the can 20 and the plate 50 have the same total height, since welding points of the can 20 and the plate 50 are relatively far apart from each other, possibility of occurrence of thermal damage of a separator provided in the electrode assembly 10 may be reduced.

### Fifth Embodiment

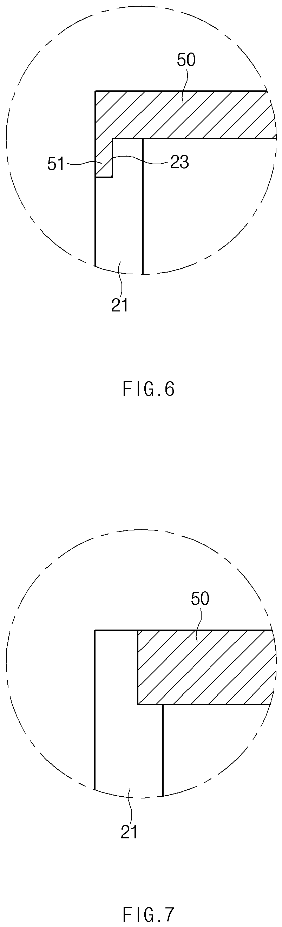

Referring to FIG. 6, a can 20 provided in this embodiment has a groove 23 (a portion that is recessed in an 'L' shape in FIG. 6) of which an upper side and an outer side are connected to each other to form a recessed shape, and an end of an edge of the plate 50 is seated on the upper end of the sidewall 21. Here, a projection 51 inserted into the groove 23 protrudes.

In this coupling structure, before the welding of the can 20 and the plate 50 is performed, an edge of the plate 50 may be seated on the can 20, and also, a height of the electrode assembly 10 may be maximized based on the same total height. In addition, a contact area increases as much as the number of contact points between the projection 51 and the groove 23 to increase in weldable area, on which the welding is performed, between the plate 50 and the can 20.

### Sixth Embodiment

Referring to FIG. 7, a can 20 provided in this embodiment has a protrusion (a portion that is formed in an 'L' shape in FIG. 7), on which a stepped portion is formed, is provided on an inner circumferential surface at an upper end of a sidewall 21, and an end of an edge of a plate 50 is coupled to be seated on the protrusion.

In this coupling structure, before the welding of the can 20 and the plate 50 is performed, an edge of the plate 50 may be seated so as to be in contact with an inner circumferential surface of the can 20, and also, a height of the electrode assembly 10 may be maximized based on the same total height. In addition, since movement of the plate 50 is restricted after being seated on the protrusion, the welding may be performed more stably and easily.

### Seventh Embodiment

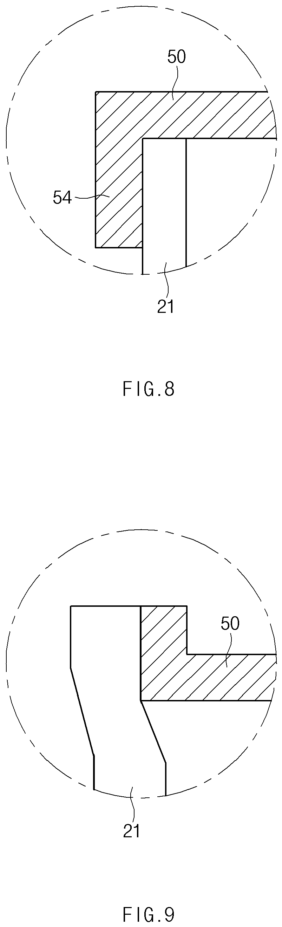

Referring to FIG. 8, in a plate 50 provided in this embodiment, when the plate 50 is seated on a sidewall 21, a bent part 54 that is expanded outward from an upper end of the sidewall 21 and is bent downward is provided at an end of an edge of the plate 50.

In this coupling structure, the edge of the plate 50 may be seated on the can 20 before the can 20 and the plate 50 are welded. Here, when the can 20 and the plate 50 have the same total height, since welding points of the can 20 and the plate 50 are relatively far apart from each other, possibility of occurrence of thermal damage of a separator provided in the electrode assembly 10 may be reduced. In addition, the welding may be performed in horizontal and diagonal directions to improve convenience of the welding process.

### Eighth Embodiment

Referring to FIG. 9, in a can 20 provided in this embodiment, like the structure provided in the first embodiment, an upper end of a sidewall 21 is bent in a direction in which an inner diameter thereof is expanded. In addition, an end of an edge of the plate 50 is coupled to be in close contact with an inner circumferential surface of an upper end of the sidewall 21. Here, a portion at which the end of the edge of the plate 50 is in close contact with the inner circumferential surface of the upper end of the sidewall 21 is bent upward.

In this coupling structure, the edge of the plate 50 may be seated to be in contact with the inner circumferential surface of the can 20 before the can 20 and the plate 50 are welded. Here, when the can 20 and the plate 50 have the same total height, since welding points of the can 20 and the plate 50 are relatively far apart from each other, possibility of occurrence of thermal damage of a separator provided in the electrode assembly 10 may be reduced. In addition, a contact area on which the welding is performed between the can 20 and the plate 50 may increase to more improve bonding force.

### Ninth embodiment

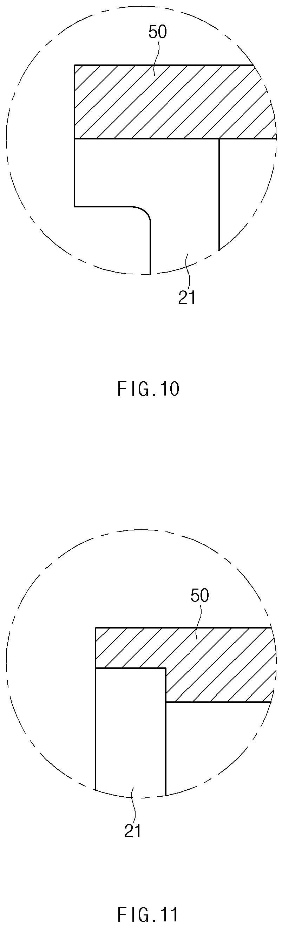

Referring to FIG. 10, in a can 20 provided in this embodiment, an upper end of a sidewall 21 is bent to have an outwardly protruding shape, an upper side of the sidewall 21 is flat, and the plate 50 is coupled to be seated on the flat end of the sidewall 21.

In this coupling structure, the edge of the plate 50 may be seated on the can 20 before the can 20 and the plate 50 are welded. Here, when the can 20 and the plate 50 have the same total height, since welding points of the can 20 and the plate 50 are relatively far apart from each other, possibility of occurrence of thermal damage of a separator provided in the electrode assembly 10 may be reduced. In addition, a welding area may increase to increase in bonding force, and since horizontal welding is possible, convenience of the welding process may be improved.

### Tenth embodiment

Referring to FIG. 11, a plate 50 provided in this embodiment has a protrusion (a portion that is recessed in a '¬' shape in FIG. 11) formed at a lower side on an end of an edge thereof, and the protrusion is coupled to be seated on an upper end of the sidewall 21.

In this coupling structure, before the welding of the can 20 and the plate 50 is performed, an edge of the plate 50 may be seated so as to be in contact with an inner circumferential surface of the can 20, and also, a height of the electrode assembly 10 may be maximized based on the same total height.

### Eleventh embodiment

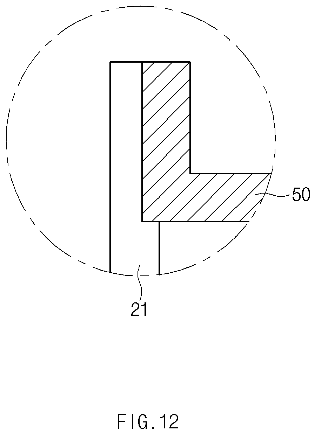

Referring to FIG. 12, a can 20 provided in this embodiment has a protrusion (a portion that is recessed in an 'L' shape in FIG. 12), on which a stepped portion is formed, is provided on an inner circumferential surface at an upper end of a sidewall 21, and an end of an edge of a plate 50 is coupled to be seated on the protrusion. In addition, a portion at which the end of the edge of the plate 50 is in close contact with an inner circumferential surface of the sidewall 21 has an upwardly bent shape.

In this coupling structure, the edge of the plate 50 may be seated to be in contact with the inner circumferential surface of the can 20 before the can 20 and the plate 50 are welded. Here, when the can 20 and the plate 50 have the same total height, since welding points of the can 20 and the plate 50 are relatively far apart from each other, possibility of occurrence of thermal damage of a separator provided in the electrode assembly 10 may be reduced. In addition, the welding may be performed in horizontal and diagonal directions to improve convenience of the welding process.

### Twelfth embodiment

Referring to FIG. 13, a structure provided in this embodiment has a shape in which concave portions 24 and 53 and convex portions 25 and 52, which are repeated along a circumference, at an end of an edge of a plate 50 and an upper end of a sidewall 21.

Also, the convex portion 25 formed on the sidewall 21 is coupled to be fitted into the concave portion 53 formed in the plate 50, and the convex portion 52 formed on the plate 50 is coupled to be fitted into the concave portion 24 formed in the sidewall 21.

In this coupling structure, the edge of the plate 50 may be seated on a can 20 before the can 20 and the plate 50 are welded, and since the concave portion 53 and the convex portion 54 of the plate 50 are fitted into the convex portion 25 and the concave portion 24 of the sidewall 21, respectively, the welding may be performed in a state of being temporarily coupled. Thus, the welding process may be performed more easily. A height of an electrode assembly 10 may be maximized based on the same total height.

In the button-type secondary battery of the present invention, which is provided with the above embodiments, since the end of the edge of the plate 50 is welded after being seated at a point that meets the upper end of the sidewall 21, the welding may be more stably performed to improve welding quality.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

- 10:: Electrode assembly
- 20:: Can
- 21:: Sidewall
- 50:: Plate

## Claims

1. A button-type secondary battery comprising:
an electrode assembly in which electrodes and a separator are wound in a state of being stacked and from which electrode tabs having different polarities protrude from top and bottom surfaces thereof, respectively;
a can comprising a bottom part placed below when the electrode assembly is mounted and connected to one electrode tab and a sidewall vertically extending along a circumference of the bottom part; and
a top cap assembly provided with a terminal part connected to the other electrode tab and a plate coupled to be insulated from the terminal part and having an edge coupled to an upper end of the sidewall, wherein, when the electrode assembly is mounted in the can, the top cap assembly is coupled to close the can,
wherein an end of an edge of the plate is welded to be coupled after being seated on a point that meets the upper end of the sidewall.

2. The button-type secondary battery of claim 1, wherein the upper end of the sidewall is bent in a direction in which an inner diameter thereof is expanded, and
the end of the edge of the plate is coupled to be in close contact with an inner circumferential surface of the upper end of the sidewall.

3. The button-type secondary battery of claim 1, wherein a protrusion on which a stepped portion is formed is provided on an inner circumferential surface at the upper end of the sidewall, and the end of the edge of the plate is coupled to be seated on the protrusion, and
the upper end of the sidewall is bent to have a shape that protrudes outward from an outer circumferential surface thereof.

4. The button-type secondary battery of claim 1, wherein an inclined surface is formed on the upper end of the sidewall to have an inner diameter that gradually increases upward, and
an inclined surface is formed on the end of the edge of the plate so that a top surface of the plate and the uppermost end of the sidewall have the same height.

5. The button-type secondary battery of claim 1, wherein the upper end of the sidewall is formed in an inwardly bent shape, and
a protrusion is also formed on a lower portion of the end of the edge of the plate so as to be seated on an end of the sidewall.

6. The button-type secondary battery of claim 1, wherein the upper end of the sidewall has a groove of which an upper side and an outer side are connected to each other to form a recessed shape, and
a projection seated on the upper end of the sidewall and inserted into the groove protrudes from the end of the edge of the plate.

7. The button-type secondary battery of claim 1, wherein a protrusion on which a stepped portion is formed is provided on an inner circumferential surface at the upper end of the sidewall, and the end of the edge of the plate is coupled to be seated on the protrusion.

8. The button-type secondary battery of claim 1, wherein a bent part that is expanded outward from the upper end of the sidewall when the plate is seated on the sidewall and is bent downward is provided on the end of the edge of the plate.

9. The button-type secondary battery of claim 1, wherein the upper end of the sidewall is bent in a direction in which an inner diameter thereof is expanded, and the end of the edge of the plate is coupled to be in close contact with an inner circumferential surface of the upper end of the sidewall, wherein a portion at which the edge of the edge of the plate is in close contact with the inner circumferential surface of the upper end of the sidewall has an upwardly bent shape.

10. The button-type secondary battery of claim 1, wherein the upper end of the sidewall is bent in an outwardly protruding shape, wherein the upper side is flat, and the upper plate is coupled to be seated on the flat end of the sidewall.

11. The button-type secondary battery of claim 1, wherein a protrusion, on which a stepped portion is formed, is formed at a lower side at the edge of the edge of the plate, and
the protrusion is coupled to be seated on the upper end of the sidewall.

12. The button-type secondary battery of claim 1, wherein a protrusion on which a stepped portion is formed is provided on an inner circumferential surface at the upper end of the sidewall, and
the protrusion is coupled to be seated on the upper end of the sidewall,
wherein a portion at which the edge of the edge of the plate is in close contact with an inner circumferential surface of the sidewall has an upwardly bent shape.

13. The button-type secondary battery of claim 1, wherein each of the end of the edge of the plate and the upper end of the sidewall has a shape in which a concave portion and a convex portion are repeated along a circumference thereof, and
the convex portion formed on the sidewall is fitted into the concave portion formed in the plate, and the convex portion formed on the plate is fitted into the concave portion formed in the sidewall.
